# EUROPÄISCHE PATENTANMELDUNG

(11) **EP 3 136 691 A1**
(43) Veröffentlichungstag der Anmeldung: **01.03.2017**
(21) Anmeldenummer: 16178199.2
(22) Anmeldetag: 06.07.2016
(51) Int. Cl.: H04L 29/08

(54) **VERFAHREN ZUR ÜBERTRAGUNG VON DATEN ZWISCHEN EINHEITEN EINER RESTFUL-ARCHITEKTUR UND MIT MUSKELKRAFT UND/ODER MIT MOTORKRAFT ANTREIBBARES FAHRZEUG**

(30) Priorität: 28.08.2015 DE 102015216530
(71) Anmelder: ROBERT BOSCH GMBH, 70442 Stuttgart (DE)
(72) Erfinder: Rempler, Hans-Uwe, 70771 Leinfelden-Echterdingen (DE); Aljazzar, Husain, 72070 Tuebingen (DE)

(57) **Zusammenfassung**

Die vorliegende Erfindung betrifft 1 ein Verfahren zur Übertragung von Daten (41, 42) zwischen Einheiten (20, 30) einer RESTful-Architektur (100) mit mindestens einer Datenquelleneinheit (20), welche mit mindestens einer Datenquelle (40) verknüpft ist, und mit mindestens einer Datenzieleinheit (30), bei welchem (A) sich die Datenquelleneinheit (20) mit der Datenquelle (40) bei der Datenzieleinheit (30) registriert, (B) die Datenzieleinheit (30) der Datenquelleneinheit (20) Empfangsbereitschaft in Bezug auf die Datenquelle (40) mitteilt und (C) die Datenquelleneinheit (20) beim Vorliegen von (i) Empfangsbereitschaft der Datenzieleinheit (30) und (ii) einer Aktualisierungsbedingung Daten (41, 42) der Datenquelle (40) an die Datenzieleinheit (30) überträgt, wobei (D) das Mitteilen (B) von Empfangsbereitschaft ein Mitteilen einer ersten Aktualisierungsmarke (50) der Datenzieleinheit (30) durch die Datenzieleinheit (30) an die Datenquelleneinheit (20) umfasst, (E) die erste Aktualisierungsmarke (50) kennzeichnend ist für in der Datenzieleinheit (30) bereits vorliegende Daten (41) aus der Datenquelle (40) und (F) die Datenquelleneinheit (20) Daten (42) aus der Datenquelle (40) an die Datenzieleinheit (30) überträgt, welche durch die erste Aktualisierungsmarke (50) der Datenzieleinheit (30) nicht erfasst sind.

## Beschreibung

### Stand der Technik

Die vorliegende Erfindung betrifft ein Verfahren zur Übertragung von Daten zwischen Einheiten einer RESTful-Architektur und ein mit Muskelkraft und/oder mit Motorkraft antreibbares Fahrzeug. Die vorliegende Erfindung betrifft insbesondere ein Verfahren zur Übertragung von Daten zwischen Einheiten einer RESTful-Architektur mit mindestens einer Datenquelleneinheit, welche mit mindestens einer Datenquelle verknüpft ist, und mit mindestens einer Datenzieleinheit und ferner ein mit Muskelkraft und/oder mit Motorkraft antreibbares Fahrzeug, vorzugsweise ein Elektrofahrrad, ein eBike, Pedelec oder dergleichen.

Das REST- oder Representational-State-Transfer-Konzept beschreibt eine Architektur und die Kommunikation zwischen Anwendungen und Diensten im oder über das Internet oder Web. Diese Form von Architektur und Kommunikation ist insbesondere für Systeme mit geringer Performance und wenig Ressourcen geeignet. Dies trifft zum Beispiel Datenerfassungssysteme mit Sensoren oder intelligente Sensoren als solche, bei welchen eine nur geringe Systemkomplexität hinsichtlich Energie- und Funktionsressourcen vorliegt.

RESTful-Kommunikation wird typischerweise basierend auf dem HTTP oder Hypertext-Transfer-Protocol durchgeführt oder auf der Grundlage des sogenannten CoAP oder Constraint-Application-Protocol. Denkbar sind dabei aber auch Ansätze, die andere HTTP-basierte Varianten verwenden.

Die RESTful-Kommunikation basiert auf einer Server-Client-Architektur. Dabei bietet der Server Ressourcen an, auf welche der Client mit bestimmten Kommunikationsoperationen zugreifen kann, zum Beispiel GET, PUT, POST, DELETE.

Denkbar sind auch weitere Protokollanbindungen wie zum Beispiel das LWM2M-oder Light-Weight-Machine-to-Machine-Protocol. Diese können insbesondere genutzt werden, um die Interoperabilität zwischen Server und Client zu erhöhen, z.B. wenn Systeme oder Teilsysteme mit nur geringer Komplexität und wenig umfangreichen Energie- und Funktionalitätsressourcen eingesetzt werden.

Problematisch bei einer derartigen RESTful-Kommunikation ist, dass beim Vorliegen großer Datenblöcke oder bei Datenblöcken, die mit der Zeit, also dynamisch verändert werden, indem sie zum Beispiel anwachsen, bei Kommunikationsproblemen oder auch beim Aktualisieren sämtliche bereits angeforderte und übertragene Daten eines Datenblocks erneut übertragen werden müssen. Dies ist nachteilig im Hinblick auf den Aufwand an Zeit, Energie und Kosten und auch im Hinblick auf die während einer Neuübertragung bestehende Fehleranfälligkeit.

### Offenbarung der Erfindung

Das erfindungsgemäße Verfahren zur Übertragung von Daten zwischen Einheiten einer RESTful-Architektur mit den Merkmalen des unabhängigen Anspruchs 1 weist demgegenüber den Vorteil auf, dass bereits abgerufene und übertragene Daten - zumindest zu einem erheblichen Teil - nicht erneut übertragen werden müssen. Diese liegen in der anfragenden und die Daten erhaltenden Einheit bereits vor und werden, zum Beispiel bei Übertragungsabbruch oder bei inzwischen erfolgtem Anwachsen der Datenmenge im zu übertragenden Datenblock, nur von der Stelle an neu oder erneut übertragen, die eine fehler- und verlustfreie Aktualisierung des Datenblocks in einer Datenquelleneinheit gewährleistet. Dies wird erfindungsgemäß mit den Merkmalen des unabhängigen Anspruchs 1 dadurch erreicht, dass ein Verfahren zur Übertragung von Daten zwischen Einheiten einer RESTful-Architektur mit mindestens einer Datenquelleneinheit, welche mit mindestens einer Datenquelle verknüpft ist, und mit mindestens einer Datenzieleinheit vorgeschlagen wird, bei welchem (A) sich die Datenquelleneinheit mit der Datenquelle bei der Datenzieleinheit registriert, (B) die Datenzieleinheit der Datenquelleneinheit Empfangsbereitschaft in Bezug auf die Datenquelle mitteilt und die Datenquelleneinheit beim Vorliegen von (i) Empfangsbereitschaft der Datenzieleinheit und (ii) einer Aktualisierungsbedingung Daten der Datenquelle an die Datenzieleinheit überträgt. Dabei ist es vorgesehen, dass (D) das Mitteilen (B) von Empfangsbereitschaft ein Mitteilen einer ersten Aktualisierungsmarke der Datenzieleinheit durch die Datenzieleinheit an die Datenquelleneinheit umfasst, (E) die Aktualisierungsmarke kennzeichnend ist für in der Datenzieleinheit bereits vorliegende Daten aus der Datenquelle und (F) die Datenquelleneinheit Daten aus der Datenquelle an die Datenzieleinheit überträgt, welche durch die Aktualisierungsmarke nicht erfasst sind.

Die erfindungsgemäß für die RESTful-Kommunikation eingeführte Aktualisierungsmarke kennzeichnet die in der Datenzieleinheit bereits vorliegenden Daten aus der Datenquelle, so dass von der Datenquelle nur diejenigen Daten neu oder erneut übertragen werden müssen, die von der Aktualisierungsmarke nicht erfasst sind. Je nach Lage der ersten Aktualisierungsmarke werden daher der Aufwand an Datenaustausch und mithin an Übertragungszeit, Energie und Kosten eingespart und eine Fehleranfälligkeit auf Grund der Reduktion der erneuten Übertragung ebenfalls reduziert.

Die Unteransprüche zeigen bevorzugte Weiterbildungen der Erfindung.

Gemäß einer vorteilhaften Weiterbildung des erfindungsgemäßen Verfahrens ist es vorgesehen, dass die Datenzieleinheit bei Empfangsbereitschaft von der Datenquelleneinheit übersandte Daten der Datenquelle empfängt und auf der Grundlage empfangener Daten die erste Aktualisierungsmarke der Datenzieleinheit in der Datenzieleinheit aktualisiert. Damit wird erreicht, dass der Datenbestand in der Datenzieleinheit hinsichtlich der Daten, der Datenquelle, nicht nur selbst aktualisiert wird, sondern dass durch Mitführen der ersten Aktualisierungsmarke dies für die weitere Datenkommunikation auch festgehalten und protokolliert wird.

Besonders effektiv gestaltet sich das erfindungsgemäße Verfahren dann, wenn gemäß einer anderen Ausführungsform die Datenquelleneinheit die beim Mitteilen (B) der Empfangsbereitschaft durch die Datenzieleinheit mitgeteilte erste Aktualisierungsmarke der Datenzieleinheit als zweite Aktualisierungsmarke für die Datenquelleneinheit in Bezug auf die Datenquelle empfängt und speichert und auf der Grundlage der an die Datenzieleinheit aus den Datenquelle gesandten Daten die zweite Aktualisierungsmarke der Datenquelleneinheit in der Datenquelleneinheit aktualisiert. Durch ein Mitführen der zweiten Aktualisierungsmarke in der Datenquelleneinheit, ausgerichtet an den bereits an die Datenzieleinheit übertragenen Daten aus der Datenquelle, wird eine zusätzliche Fehlerredundanz erreicht, zum Beispiel dann, wenn Diskrepanzen auftreten zwischen der in der Datenzieleinheit fortgeschriebenen ersten Aktualisierungsmarke und der in der Datenquelleneinheit fortgeschriebenen zweiten Aktualisierungsmarke. Zusätzlich ist es auf Grund des Mitschreibens der zweiten Aktualisierungsmarke in der Datenquelleneinheit möglich, auf ein Neuübersenden der ersten Aktualisierungsmarke aus der Datenzieleinheit an die Datenquelleneinheit zu verzichten, zum Beispiel dann, wenn ein Übertragungsfehler beim Übertragen einer aktuellen ersten Aktualisierungsmarke aus der Datenzieleinheit an die Datenquelleneinheit aufgetreten sein sollte.

Alternativ kann der Übertragungsfortschritt auch in oder auf der Datenzieleinrichtung gespeichert werden, z.B. im Zusammenhang mit der Größe oder Kapazität der Datensenke.

Das erfindungsgemäße Verfahren gestaltet sich besonders flexibel, wenn gemäß einer weiteren Ausgestaltungsform beim Vorliegen mehrerer Datenquelleneinheiten, mehrerer Datenquellen in einer und/oder in mehreren Datenquelleneinheiten und/oder mehrerer Datenzieleinheiten Schritte des Registrierens (A), des Mitteilens (B) der Empfangsbereitschaft, des Mitteilens (D) der ersten Aktualisierungsmarke und/oder des Übertragens (F) der Daten aus einer Datenquelle und/oder die erste und zweite Aktualisierungsmarke für jede Kombination aus Datenquelleneinheit, Datenquelle und/oder Datenzieleinheit unabhängig ausgeführt werden. Auf diese Weise ist es möglich, Datenströme zwischen unabhängigen Datenquelleneinheiten, Datenquellen und Datenzieleinheiten zu koordinieren, ohne dass es zu Konflikten beim Datenaustausch kommt.

Das erfindungsgemäße Verfahren lässt sich an die jeweilige Systemarchitektur und das Einsatzgebiet besonders flexibel anpassen, indem eine Aktualisierungsbedingung bestimmt wird durch (i) einen Zeitablauf und/oder (ii) durch eine Anforderung einer Datenzieleinheit und/oder (iii) durch eine Änderung der und/oder einen Zuwachs an Daten in einer Datenquelle. Es sind aber auch andere zusätzlich oder alternative Bedingungen denkbar, auf deren Grundlage eine Aktualisierungsbedingung gestaltet werden kann. Auf diese Weise kann das Verhalten des Verfahrens an die besonderen Anforderungen der involvierten Anwendungen angepasst werden.

Das erfindungsgemäße Verfahren lässt sich besonders gewinnbringend beim Austausch blockbasierter und/oder framebasierter Daten anwenden, weil in diesem Fall ggf. auch große hohe Datenmengen oder Datenmengen, die mit der Zeit dynamisch anwachsen, besonders zuverlässig gehandhabt werden können.

Das erfindungsgemäße Verfahren lässt sich besonders einfach durchführen, wenn eine Aktualisierungsmarke als ein Zeiger oder nach Art eines Zeigers aufgebaut ist, welcher insbesondere auf ein Ende eines zuletzt vollständig übertragenen und/oder empfangenen Blocks oder Frames oder Teils davon verweist.

Das erfindungsgemäße Verfahren lässt sich auch bei Systemkomponenten leicht integrieren, welche nur geringere Ressourcen an Funktionalität und Leistung besitzen. Dies kann insbesondere erreicht werden, wenn eine Datenquelle einer Datenquelleneinheit und/oder eine Datensenke einer Datenzieleinheit jeweils nach Art eines Ringpuffers organisiert ist und/oder verwaltet wird. In diesem Fall ist es möglich, den Umfang der zur Verfügung zu stellenden Speicherressourcen auf ein Mindestmaß zu beschränken, nämlich auf die jeweils aktuellsten auszutauschenden Daten. Dadurch sind Einsparungen hinsichtlich bereitzustellendem Speicherbedarf, Energie und Verwaltungsaufwand erzielbar.

Besonders leicht lässt sich das erfindungsgemäße Verfahren auch in bestehende Systeme integrieren, wenn dieses auf einem Protokoll gemäß mindestens einem der Standards HTTP, LWM2M, CoAP oder dergleichen basiert.

Es ist ein besonders flexibler Einsatz des erfindungsgemäßen Verfahrens mit vielen Einsatzszenarien möglich, indem Kommunikation realisiert wird (i) zwischen einem mobilen Endgerät als Datenquelleneinheit und einer Servereinrichtung als Datenzieleinheit und/oder (ii) zwischen einem ersten mobilen Endgerät als Datenquelleneinheit und einem zweiten mobilen Endgerät als Datenzieleinheit und/oder (iii) deren Kombinationen.

Besonders vorteilhaft gestaltet sich das erfindungsgemäße Verfahren dadurch, dass im Zusammenhang mit der REST-Architektur stehende RESTful-Operationen bei der Durchführung des Verfahrens verwendet werden können.

So ist es bei einer bevorzugten Ausführungsform des erfindungsgemäßen Verfahrens vorgesehen, dass ein Registrieren (A) einer Datenquelleneinheit bei einer Datenzieleinheit erfolgt durch Mitteilen ein oder mehrere Ressourcen als Datenquellen und insbesondere über eine RESTful-Operation "REST ressource /path/.../data" der Pfadangabe von der Datenquelleneinheit zur Datenzieleinheit.

Bei einer anderen Ausgestaltungsform des erfindungsgemäßen Verfahrens ist es vorgesehen, dass ein Mitteilen (B) der Empfangsbereitschaft einer Datenzieleinheit an eine Datenquelleneinheit in Bezug auf eine Datenquelle erfolgt durch (i) eine RESTful-Operation des Übertragens "write_attribute(offset=x_0, update_freq, block-size, ...)" von Attributen von der Datenzieleinheit an die Datenquelleneinheit und/oder (ii) eine RESTful-Operation "observe()" der eigentlichen Bereitschaftsmitteilung von der Datenzieleinheit (30) an die Datenquelleneinheit.

Die zu Grunde gelegte RESTful-Architektur ermöglicht gerade den Austausch sensorbasierter Daten. So ist es bei einer anderen bevorzugten Ausführungsform des Verfahrens vorgesehen, dass Daten einer Datenquelle Positionsdaten, Performancedaten, Personendaten und/oder Gesundheitsdaten sind, insbesondere bestimmt mittels Sensoren an einem Fahrzeug, insbesondere an einem mit Muskelkraft und/oder Motorkraft antreibbaren Fahrzeug, vorzugsweise einem Elektrofahrrad, eBike oder Pedelec.

Gemäß einem weiteren Aspekt, betrifft die vorliegende Erfindung ferner ein mit Muskelkraft und/oder mit Motorkraft antreibbares Fahrzeug.

Dabei kann es sich insbesondere um ein Elektrofahrrad, ein eBike, ein Pedelec oder dergleichen handeln, welches ausgebildet ist mit einer Sensoreinrichtung zur Datenerfassung, insbesondere von Positionsdaten, Performancedaten, Personendaten und/oder Gesundheitsdaten.

Die Sensoreinrichtung kann direkt oder über eine Steuereinheit am Fahrzeug zur Datenübertragung mittels eines erfindungsgemäßen Verfahrens eingerichtet sein.

### Kurzbeschreibung der Figuren

Unter Bezugnahme auf die beigefügten Figuren werden Ausführungsformen der Erfindung im Detail beschrieben.
- Figur 1: ist eine schematische Blockansicht, welche ein Kommunikationssystem unter Verwendung einer Ausführungsform des erfindungsgemäßen Verfahrens beschreibt.
- Figur 2: ist eine schematische Seitenansicht einer Ausführungsform eines erfindungsgemäßen Fahrzeugs, bei welchem das erfindungsgemäße Verfahren zum Einsatz kommen kann.
- Figur 3: zeigt Schritte einer Ausführungsform des erfindungsgemäßen Verfahrens nach Art eines Sequenzdiagramms.
- Figuren 4 bis 6: zeigen schematisch einen möglichen seriellen Aufbau von Blockdatenobjekten, die bei einer Ausführungsform des erfindungsgemäßen Verfahrens übertragen werden können.
- Figur 7: zeigt schematisch den Aufbau einer Datenquelle beziehungsweise einer Datensenke nach Art eines Ringpuffers oder Ringspeichers, wie er erfindungsgemäß zum Einsatz kommen kann.

### Bevorzugte Ausführungsformen der Erfindung

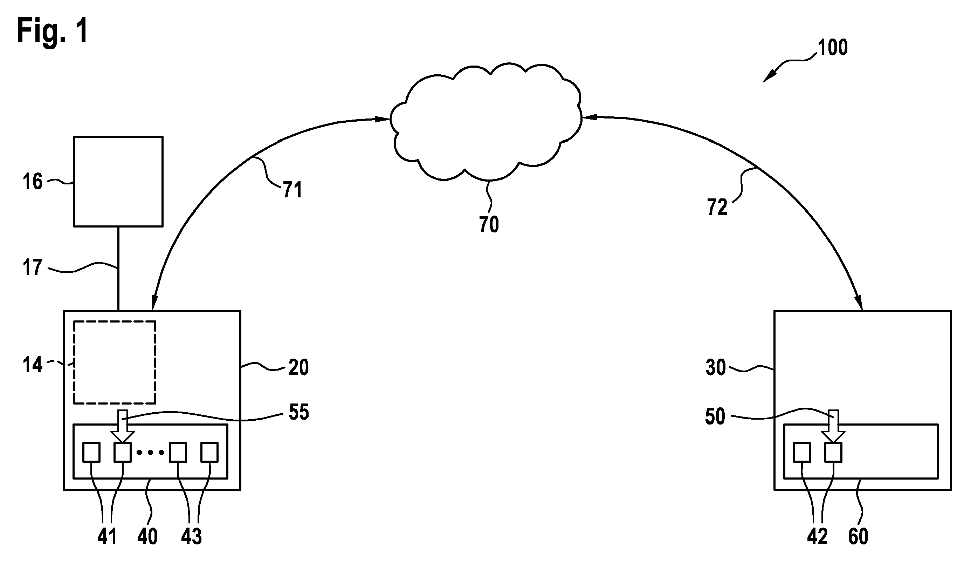

Nachfolgend werden unter Bezugnahme auf die Figuren 1 bis 7 Ausführungsformen des erfindungsgemäßen Verfahrens sowie des erfindungsgemäßen Fahrzeugs 1 im Detail erläutert. Dabei werden gleiche oder äquivalente oder gleich oder äquivalent wirkende Elemente mit denselben Bezugszeichen bezeichnet. Nicht in jedem Fall ihres Auftretens wird die Detailbeschreibung der bezeichneten Elemente wiederholt. Die in den Figuren dargestellten Eigenschaften und Merkmale können einzeln in beliebiger Form miteinander kombiniert werden.

Figur 1 zeigt nach Art eines schematischen Blockdiagramms ein System 100 auf der Grundlage einer RESTful-Architektur.

Bei dieser Ausführungsform des Systems 100 sind eine Datenquelleneinheit 20 mit einer Datenquelle 40 und eine Datenzieleinheit 30 mit einer Datensenke 60 über Kommunikationskanäle 71 und 72 mit einem Netzwerk 70, zum Beispiel dem Internet, zur Kommunikation miteinander verbunden.

Die Datenquelleneinheit 20 weist in ihrer Datenquelle 40 Daten 41, 43 als Einträge in der Datenquelle 40 auf. Diese Daten 41, 43 können zum Beispiel aus einer internen Sensoreinrichtung 14 oder einer externen Sensoreinrichtung 16, die über eine Kommunikationsleitung 17 mit der Datenquelleneinheit 20 verbunden ist, stammen. Alternativ oder zusätzlich können die Daten 41, 43 auch anderen Ursprungs sein, zum Beispiel können es Auswertedaten sein, die aus Messdaten abgeleitet wurden.

Im Anwendungsfall kann es sich bei den Daten 41, 43 der Datenquelle 40 um personenbezogene Daten handeln, zum Beispiel um Gesundheitsdaten, um Positionsdaten der Einrichtung, in welcher sich die Datenquelleneinheit 20 und/oder die Sensoren 14, 16 befinden oder Performance-Daten, zum Beispiel Funktions- oder Leistungsdaten eines Gerätes oder einer Person und ihrer Aktivitäten.

Über den primären Kommunikationskanal 71, das damit angeschlossene Netz oder Internet 70 und den sekundären Kommunikationskanal 72 registriert sich die Datenquelleneinheit 20 im Sinne des RESTful-Konzepts mit ihrer oder einer Datenquelle 40 bei der Datenzieleinheit 30 und bietet die Daten 41, 43 der Datenquelle 40 oder die Datenquelle 40 in ihrer Gesamtheit als Ressource an. Als Folge davon teilt die Datenzieleinheit 30 der Datenquelleneinheit 20 gegebenenfalls ihre Empfangsbereitschaft in Bezug auf die Datenquelle 40 mit. Sind mehrere Datenquellen 40 vorhanden, so erfolgt diese Mitteilung gegebenenfalls für jede Datenquelle 40 gesondert.

Sind mehrere Datenquellen 40 vorhanden, so kann die Registrierung der Datenquelleneinheit 20 gegebenenfalls in Bezug auf jede einzelne Datenquelle 40 gesondert und unabhängig erfolgen.

Die Datenquelleneinheit 20 überträgt unter bestimmten Bedingungen Daten aus der Datenquelle 40 an die Datenzieleinheit 30.

Die Bedingungen zur Datenübertragung sind einerseits (i) die Empfangsbereitschaft der Datenzieleinheit 30 in Bezug auf die Datenquelle 40 der Datenquelleneinheit 20. Andererseits muss (ii) eine Aktualisierungsbedingung in Bezug auf die Daten 41, 43 der Datenquelle 40 der Datenquelleneinheit 20 vorliegen. Sind sämtliche Voraussetzungen für die Datenübertragungen erfüllt, so überträgt die Datenquelleneinheit 20 Daten 41 aus der Datenquelle 40 über die Kommunikationskanäle 71, 72 und das Internet 70 an die Datenzieleinheit 30, wo diese in der Datensenke 60 als Daten 42 abgelegt werden.

Erfindungsgemäß ist es vorgesehen, das beim Mitteilen der Empfangsbereitschaft durch die Datenzieleinheit 30 an die Datenquelleneinheit 20 auch eine erste Aktualisierungsmarke 50 der Datenzieleinheit 30 durch die Datenzieleinheit 30 an die Datenquelleneinheit 20 übertragen wird. Diese wird dann dort als zweite Aktualisierungsmarke 55 der Datenquelleneinheit 20 in der Datenquelleneinheit 20 übernommen und zeigt dort in den Daten 41, 43 der Datenquelle 40 auf das Datenelement, bis zu welchem die Daten 41, 43 aus der Datenquelle 40 von der Datenquelleneinheit 20 an die Datenzieleinheit 30 übertragen wurden.

Die Daten 41 bezeichnen diejenigen der Daten 41, 43 der Datenquelle 40, die bereits an die Datenzieleinheit 30 übertragen wurden und/oder dort insbesondere als Daten 43 in der Datensenke 60 vorliegen. Die Daten 43 bezeichnen diejenigen der Daten 41, 43 der Datenquelle 40, die noch nicht an die Datenzieleinheit 30 übertragen wurden und/oder dort nicht als Daten 42 in der Datensenke 60 vorliegen.

Zu Beginn des Verfahrens, bevor zum Beispiel jegliche Datenübertragung stattgefunden hat, kann also die erste Aktualisierungsmarke 50 in der Datenzieleinheit 30 beziehungsweise die zweite Aktualisierungsmarke 55 in der Datenquelleneinheit 20 auf den Beginn des Datensatzes der Datenquelle 40 in der Datenquelleneinheit 20 beziehungsweise auf den Beginn der Datensenke 60 in der Datenzieleinheit 30 zeigen.

Nach einem Übertragen von Daten 41 und der Datenquelleneinheit 20 aus der Datenquelle 40 an die Datenzieleinheit 30 in die Datensenke 60 hinein wird die zweite Aktualisierungsmarke 55 auf den neuesten Stand gebracht und zeigt auf dasjenige Datenelement 41, welches zuletzt an die Datenzieleinheit 30 übertragen wurde. Entsprechend wird auch die erste Aktualisierungsmarke 50 in der Datenzieleinheit 30 aktualisiert. Im Idealfall entsprechen diese einander oder sind identisch.

Die ersten und zweiten Aktualisierungsmarken 50 und 55 können zum Beispiel auch durch einen weiteren Kommunikationsschritt miteinander abgeglichen werden.

In der Figur 1 ist die zweite Aktualisierungsmarke 55 in der Datenquelleneinheit 20 durch einen senkrecht verlaufenden Pfeil dargestellt. Die Daten 41 in der Datenquelle 40 von links bis zum Pfeil der zweiten Aktualisierungsmarke 55 wurden bereits an die Datenzieleinheit 30 übertragen und sind dort in der Datensenke 60 als Daten 42 abgelegt. Die Pfeile zu den Aktualisierungsmarken 55 und 50 in der Datenquelleneinheit 20 in der Datenzieleinheit 30 entsprechen also einander.

Beim nächsten Aktualisierungsvorgang in Bezug auf die Daten 41, 43 in der Datenquelle 40 wird dann mit der Übertragung der Daten 43 begonnen, die sich rechts an die zweite Aktualisierungsmarke 55 in der Datenquelle 40 der Datenquelleneinheit 20 anschließen, Das bedeutet, es wird nicht der gesamte Datensatz übertragen, sondern nur die "fehlenden" Daten nach der zweiten Aktualisierungsmarke 55.

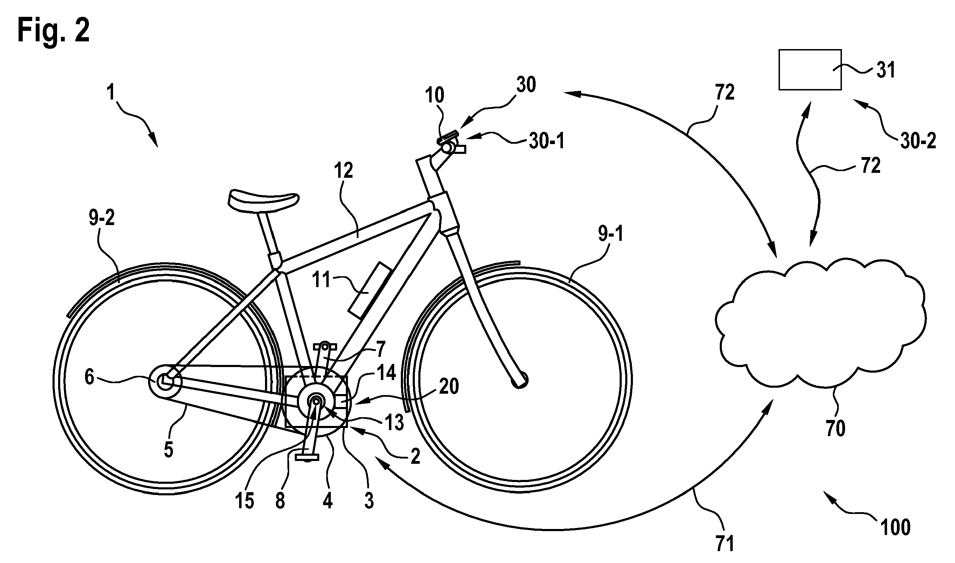

Die Figur 2 zeigt in schematischer Seitenansicht die Anwendung einer Ausführungsform des erfindungsgemäßen Verfahrens für die Kommunikation einer RESTful-Architektur 100 bei einem Fahrzeug 1 nach Art eines Elektrofahrrades oder eBikes.

Das Elektrofahrrad 1 mit Vorderrad 9-1 und Hinterrad 9-2 umfasst gemäß Figur 2 einen Kurbeltrieb 2 mit zwei Kurbeln 7, 8, an denen Pedale angeordnet sind. Ein elektrischer Antrieb 3 ist in den Kurbeltrieb 2 integriert. Am Hinterrad 9-2 ist eine Gangschaltung 6 angeordnet.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf ein Ritzel der Gangschaltung 6 übertragen.

Am Lenker des Fahrrads 1 ist ferner eine Steuereinheit 10 angeordnet, welche mit dem elektrischen Antrieb 3 verbunden ist. Eine Batterie 11 dient zur Stromversorgung des elektrischen Antriebs 3.

Im Rahmen 12 integriert ist im Kurbelgehäuse 13 eine Kurbelwelle 15 des Kurbeltriebs 2 ausgebildet, an welcher an deren Enden jeweils eine Kurbel 7, 8 montiert ist.

Die RESTful-Architektur 100 wird hier insbesondere gebildet von einem Sensor 14 im Bereich des Tretlagers 13, welcher als intelligenter Sensor 14 die Datenquelleneinheit 20 oder einen Teil davon bildet.

Als Datenzieleinheiten 30 kommen hier die Steuereinheit 10 als erste Datenzieleinheit 30-1 oder ein externer Server 31 als zweite Datenzieleinheit 30-2 in Frage.

Mit dem erfindungsgemäßen Verfahren zur Übertragung von Daten können vom intelligenten Sensor 14 als Datenquelleneinheit 20 über den primären Kommunikationskanal 71 und die sekundären Kommunikationskanäle 72, die erfassten und/oder ausgewerteten und gegebenenfalls gespeicherten Messdaten über das Internet 70 an die Steuereinheit 10 als erste Datenzieleinheit 30-1 und/oder an den externen Server 31 als zweite Datenzieleinheit 30-2 übertragen werden. Es kann sich zum Beispiel um die Performance-Daten aus dem Tretlager, ein Drehmoment und/oder eine Drehzahl handeln. Die erste und die zweite Datenzieleinheit 30-1, 30-2 können dabei in Bezug auf die Daten in der Datenquelleneinheit 20 unterschiedliche Empfangsbereitschaftsbedingungen und Aktualisierungsbedingungen besitzen. Sie können entsprechend auch unterschiedliche und voneinander unabhängige erste und zweite Aktualisierungsmarken zur Anwendung kommen.

Die unterschiedlichen Bedingungen der Aktualisierung und Bereitschaft können zum Beispiel berücksichtigen, dass auf einem stationär betriebenen Server 31 aus Datenzieleinheit 30-2 die Daten häufiger aktualisiert werden, als bei einem mobilen Gerät, zum Beispiel der Steuereinheit 10 als Datenzieleinheit 30-1, die mit nur geringen Ressourcen und einer geringen Performance ausgestattet ist.

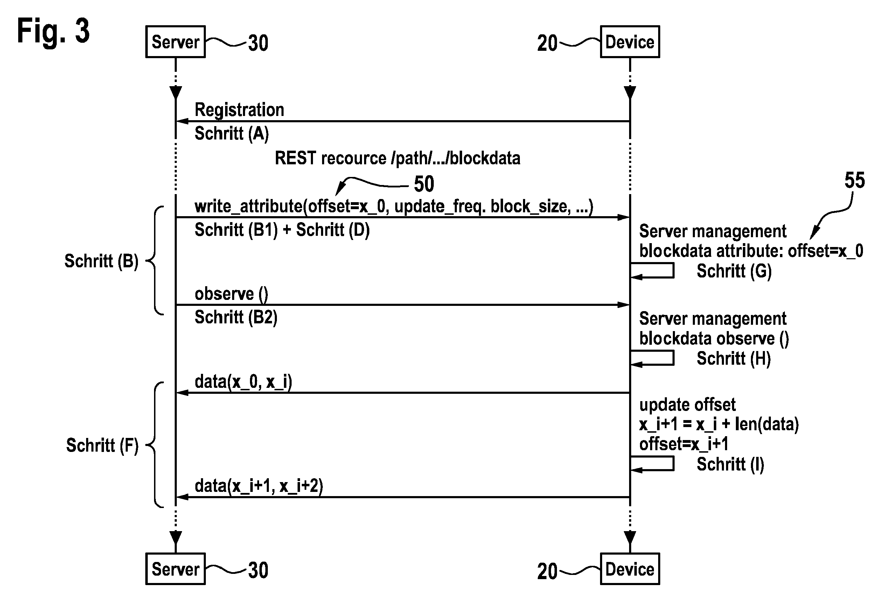

Die Figur 3 zeigt nach Art eines schematischen Sequenzdiagramms maßgebliche Aspekte einer Ausführungsform des erfindungsgemäßen Verfahrens zur Übertragung von Daten zwischen Einheiten einer RESTful-Architektur 100.

Als Einheiten sind hier ein Gerät oder Device als Datenquelleneinheit 20 und ein Server als Datenzieleinheit 30 gezeigt.

Zunächst erfolgt in einem Schritt (A) die Registrierung des Gerätes als Datenquelleneinheit 20 mit der Datenquelle 40 beim Server als Datenzieleinheit 30.

Dann erfolgt in einem Schritt (B) das Mitteilen der Empfangsbereitschaft der Datenzieleinheit 30 in Bezug auf die Datenquelle 40 an die Datenquelleneinheit 20.

Der Schritt (B) ist in einen Teilschritt (B1) der Mitteilung von Attributen und einen Teilschritt Schritt (B2) der Mitteilung der eigentlichen Empfangsbereitschaft untergliedert. Im Rahmen des Teilschrittes (B1) der Mitteilung der Attribute werden die bestehende Aktualisierungsmarke 50 und gegebenenfalls weitere Parameter, zum Beispiel eine Aktualisierungsfrequenz und eine übertragbare Blockgröße, an die Datenquelleneinheit 20 mitgeteilt.

Als Folge des Schrittes (B) werden im Bereich der Datenquelleneinheit 20 entsprechend eine Aktualisierungsmarke 55 gesetzt sowie eine Marke, die angibt, dass sich die Datenzieleinheit 30 in Bezug auf die Datenquelle 40 in Empfangsbereitschaft befindet.

Beim Vorliegend sämtlicher Aktualisierungsbedingungen überträgt im Schritt (F) die Datenquelleneinheit 20 aus der Datenquelle 40 die Daten 41 an die Datenzieleinheit 30.

Im Schritt (I) wird nach jeder Übertragung von Daten die Aktualisierungsmarke 55 in der Datenquelleneinheit 20 so aktualisiert, dass sie wieder kennzeichnend ist für die bereits aus der Datenquelle 40 an die Datenzieleinheit 30 übertragenen und dort empfangenen Daten.

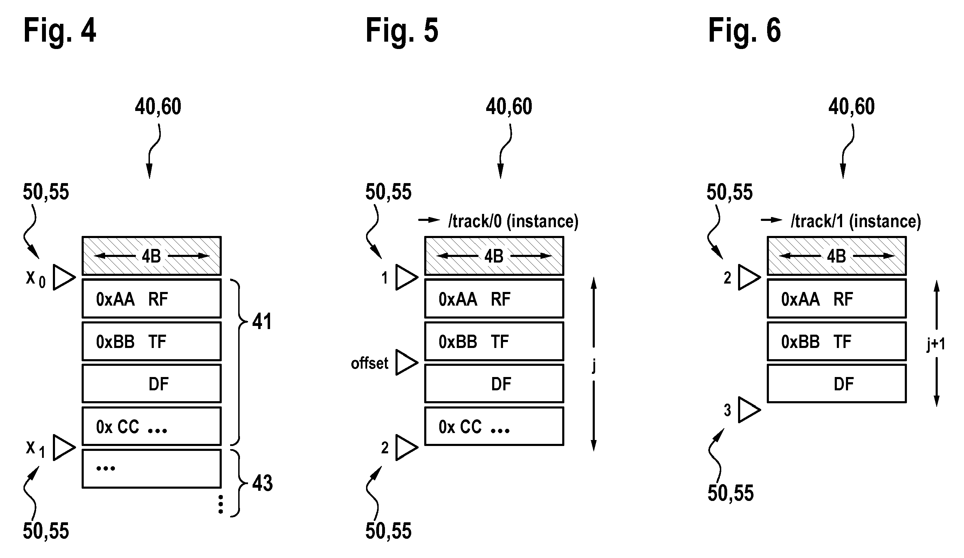

Die Figuren 4 bis 6 zeigen nach Art einer Tabelle den Aufbau blockartiger Datenobjekte im Zusammenhang mit einer Ausführungsform des erfindungsgemäßen Verfahrens zum Übertragen von Daten zwischen Einheiten 20, 30 einer RESTful-Architektur.

In der linken Spalte jeder Tabelle stehen die entsprechenden konkreten Dateneinträge. Die rechten Spalten geben jeweils den Datentyp an. Es handelt sich beim Typ RF um Tracking- oder Parcourdaten im Sinne von Referenz- oder Positionsdaten, beim Typ TF um Temperaturdaten und beim Typ DF für Differenzdaten. Am linken Rand der Tabelle sind Aktualisierungsmarken 50, 55 jeweils nach Art eines Offsets eingetragen.

Bei der Darstellung des Blockdatenobjekts gemäß Figur 4 ist zum Beispiel x₀ die Aktualisierungsmarke 50, 55 vor Beginn jeglicher Datenübertragung. Die Aktualisierungsmarken 50, 55 stehen somit am Anfang der jeweiligen Datensätze oder zu beschreibenden Datenbereiche in der Datenquelle 40 beziehungsweise in der Datensenke 60.

Nach dem ersten Übertragen von Daten 41 aus der Datenquelle 40 in die Datensenke 60 steht die Aktualisierungsmarke 50, 55 jeweils beim Wert x₁ und grenzt somit den Bereich der bereits übertragenen Daten 41 vom Bereich der noch zu übertragenden oder zukünftigen Daten 43 in der Datenquelle 40 ab.

Die Figuren 5 und 6 zeigen, dass derselbe Blockdatensatz unter Verwendung unterschiedlicher Aktualisierungsmarken 50, 55 mit unterschiedlichen Modalitäten an entsprechend unterschiedliche Datenzieleinheiten 30 übertragen werden kann. Die Unterschiede können zu Stande kommen auf Grund unterschiedlicher (i) Aktualisierungsfrequenzen, (ii) zu übertragender Blockgrößen und/oder (iii) individueller Übertragungshistorien, zum Beispiel mit unterschiedlichen Unterbrechungen oder Übertragungszeitspannen, die im Zusammenhang stehen können mit unterschiedlichen Erreichbarkeiten der jeweiligen Systeme im Netz.

Zusammenfassend kann als ein Vorteil der Erfindung festgestellt werden, dass erfindungsgemäß der Aufwand an erneuter Übertragung von Daten reduziert ist. In Figur 5 müssen z.B. die Daten zwischen den Markierungen "1" und "offset" nicht erneut übertragen werden.

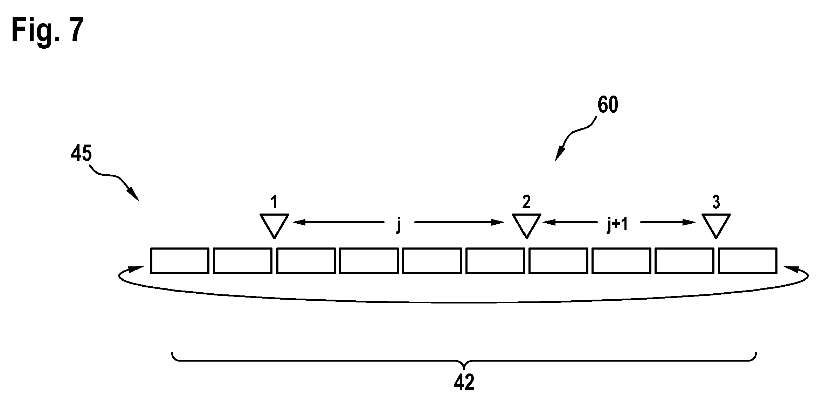

Figur 7 zeigt in schematischer Form die Ausgestaltung einer Datenquelle 40 oder einer Datensenke 60 nach Art eines Ringpuffers 45, bei welchem die jeweils ältesten Daten aus den Speicherbereichen "herausgeschoben" und durch jeweils aktuellste Daten ersetzt werden. Diese Maßnahme ermöglicht die optimale Ausnutzung beim Vorliegen eines nur geringen Speicherumfangs. Das Symbol j in Figur 7 kennzeichnet einen Zählindex für die einzelnen Übertragungsvorgänge und entsprechend für die Aktualisierungen der ersten und zweiten Aktualisierungsmarken 50, 55.

Diese und weitere Aspekte und Vorteile werden auch an Hand der nachfolgenden Erläuterungen verdeutlicht:
Das Representational-State-Transfer- oder REST-Konzept beschreibt eine Architektur für die Kommunikation zwischen Anwendungen oder Applikationen und Diensten oder Services im Web.

RESTful-Kommunikation wird typischerweise basierend auf dem Hypertext-Transfer-Protocol oder HTTP oder dem Constrained-Application-Protocol oder CoAP realisiert.

Eine RESTful-Kommunikation basiert auf einer Server-Client-Architektur. Der Server bietet Ressourcen, auf die der Client z.B. mit Kommunikationsoperationen wie GET, PUT, POST, DELETE, etc. zugreifen kann.

In einem RESTful-System kann eine Ressource z.B. aus einem großen Datenblock bestehen. Das REST-Konzept erlaubt die Übertragung einer solchen Blockressource entweder nur als Ganzes oder blockweise.

In manchen Anwendungsfällen in der Praxis kann passieren, dass die Daten der Ressource dynamisch anwachsen. D.h., neue Datenelemente werden dem Datenblock über die Zeit angefügt. Damit der Client die neuen Daten erhält, müssen die gesamte Ressource oder zumindest der gesamte Datenblock (die neuen und die alten Daten) erneut übertragen werden.

Der aktuelle Stand des REST-Konzeptes erlaubt und ermöglicht keine Übertragung nur der neuen Datenelemente ohne Übertragung der alten Datenelemente.

Die bisherigen Mechanismen im REST-Konzept haben z.B. zur Folge, dass jedes Mal, wenn Trackingdaten neu hinzukommen, alle bisherigen Trackingdaten als Block wieder komplett übertragen werden müssen. Dadurch werden viele Daten mehrfach übertragen.

Als weiterer Nachteil ergibt sich, dass bei einem Verbindungsabbruch die Übertragung wieder von Anfang an beginnen muss.

Dies hat bisher eine Zeitverzögerung und zusätzliche Kosten für das Datenvolumen zur Folge und es ist keine effiziente und schlanke

Datenübertragung von anwachsenden Blockdaten und bei Verbindungsunterbrechungen möglich.

Der erfindungsgemäße Ansatz bietet hierfür eine einfache Lösung, die eine effiziente Übertragung nur der neuen Daten ermöglicht und die mehrfache Übertragung alter Daten vermeidet.

Die vorliegende Erfindung beschreibt also einen Ansatz zur effizienten Übertragung von dynamisch anwachsenden Datenblockressourcen, wobei mehrfache Übertragung der alten Daten minimiert wird.

Dadurch werden eine Kommunikationszeitverzögerung, Kommunikationskosten und der Energieverbrauch im System verringert.

Die Erfindung kombiniert einen effizienten Mechanismus zur Übertragung von Blockressourcen mit der Beobachterfunktionalität in einem RESTful-System. Diese Mechanismen können durch ein zusätzliches Attribut erweitert werden, um die Datenübertragung pausieren und fortsetzen zu können.

Das hat Vorteile bei instabilen Funknetzverbindungen, z.B. wenn man beim Tracken unterwegs ist und die Daten via Mobilfunknetz übermittelt. Als weiterer Vorteil können für mehrere Server die Datenübertragung an unterschiedlichen Stellen fortgesetzt werden. Beispielsweise kann einem Internetserver ein Blockdatenobjekt einer Tracking Aufzeichnung erst bei einer WLAN Verbindung komplett von Anfang an übermittelt werden, während einem Mobilgerät das gleiche Blockdatenobjekt kontinuierlich und blockweise bereits während des Trackens übermittelt wird.

Ein Gerät zur Aufzeichnung und Ermittlung von Positionsdaten, aufgefasst als Datenquelleneinheit 20, registriert sich erfindungsgemäß bei einem Server, aufgefasst als Datenzieleinheit 30. Das Gerat teilt als Datenquelleneinheit 20 seine Datenobjekte, aufgefasst als Datenquelle 40 und deren Objekte, in einer REST-Verzeichnisstruktur dem Server als Datenzieleinheit 30 mit, wie dies auch im Sequenzdiagram der Figur 3 dargestellt ist.

Ein Datenobjekt kann z.B. ein einzelnes Blockdatenobjekt einer Aufzeichnung sein, wie dies in den Figuren 4 bis 6 erläutert ist.

Eine Verzeichnisstruktur für mehrere Datenobjekte kann gemäß den Figuren 5 und 6 als Instanzen, z.B. "/track/0", "/track/1" mehrere, verschiedene Tracks enthalten. Die Tracks können unterschiedliche Aufzeichnungen sein, z.B. Positionsdaten (referenceframe "RF", deltaframe "DF"), Temperaturdaten (temperatureframe "TF"), Sensordaten, etc. Es erfolgt also insbesondere ein Instanziieren eines Trackobjektes als Adresse, z.B. im Zusammenhang mit freien Trackingdaten.

Für zusammenhängende Aufzeichnungen können die Tracks im Gerät als Ringpuffer durch Marker ("1", "2", "3") getrennt werden, wie dies im Zusammenhang mit Figur 7 erläutert wird.

Der Server kann ein Datenobjekt anfordern und dabei in der Anfrage ein Parameter "offset=x_0" angeben. So wird das Device die Daten ab Position x_0 in der Antwort senden. Der Server kann auch Datenobjekte oder ganze Verzeichnisstrukturen inklusive mehrerer Datenobjekte beobachten. Der Server setzt auf dem Gerat Attribute, wie z.B. eine Aktualisierungsfrequenz "update_freq". Zusätzlich wird vom Server ein neues Attribut "offset=x_0" übermittelt. Das Gerät als Datenquelleneinheit 20 speichert intern den übermittelten Offset-Wert für jeden Server. Sobald der Server die Blockdaten vom Gerat anfordert, z.B. über "observe()" abonniert, werden die Daten ab dem Offset-Wert, also der Aktualisierungsmarke 55, übermittelt. Nachdem ein Teil der Blockdaten "data(x_0, x_i)" erfolgreich übermittelt worden ist, aktualisiert das Gerat den Offset-Wert, also die Aktualisierungsmarke 55, über "offset=x_i+len(data)", wie dies auch im Zusammenhang mit Figur 3 beschrieben wurde.

Das Attribut "offset" zeigt als Aktualisierungsmarke 55 für jeden Server als Datenzieleinheit 30 als Zeiger auf die Position der zuletzt übermittelten Daten. Die nächste Datenübertragung beginnt dann erfindungsgemäß an oder direkt nach der zuletzt geendeten Position.

## Patentansprüche

1. Verfahren zur Übertragung von Daten (41, 42) zwischen Einheiten (20, 30) einer RESTful-Architektur (100) mit mindestens einer Datenquelleneinheit (20), welche mit mindestens einer Datenquelle (40) verknüpft ist, und mit mindestens einer Datenzieleinheit (30),
bei welchem:
(A) sich die Datenquelleneinheit (20) mit der Datenquelle (40) bei der Datenzieleinheit (30) registriert,
(B) die Datenzieleinheit (30) der Datenquelleneinheit (20) Empfangsbereitschaft in Bezug auf die Datenquelle (40) mitteilt und
(C) die Datenquelleneinheit (20) beim Vorliegen von (i) Empfangsbereitschaft der Datenzieleinheit (30) und (ii) einer Aktualisierungsbedingung Daten (41, 42) der Datenquelle (40) an die Datenzieleinheit (30) überträgt,
wobei:
(D) das Mitteilen (B) von Empfangsbereitschaft ein Mitteilen einer ersten Aktualisierungsmarke (50) der Datenzieleinheit (30) durch die Datenzieleinheit (30) an die Datenquelleneinheit (20) umfasst,
(E) die erste Aktualisierungsmarke (50) kennzeichnend ist für in der Datenzieleinheit (30) bereits vorliegende Daten (41) aus der Datenquelle (40) und
(F) die Datenquelleneinheit (20) Daten (42) aus der Datenquelle (40) an die Datenzieleinheit (30) überträgt, welche durch die erste Aktualisierungsmarke (50) nicht erfasst sind.

2. Verfahren nach Anspruch 1,
- bei welchem die Datenzieleinheit (30) bei Empfangsbereitschaft von der Datenquelleneinheit (20) übersandte Daten (41) der Datenquelle (40) empfängt und
- bei welchem die Datenzieleinheit (30) auf der Grundlage empfangener Daten (41) die erste Aktualisierungsmarke (50) in der Datenzieleinheit (30) aktualisiert.

3. Verfahren nach einem der vorangehenden Ansprüche,
- bei welchem die Datenquelleneinheit (20) die beim Mitteilen (B) der Empfangsbereitschaft durch die Datenzieleinheit (30) mitgeteilte erste Aktualisierungsmarke (50) für die Datenzieleinheit (30) als zweite Aktualisierungsmarke (55) für die Datenquelleneinheit (30) in Bezug auf die Datenquelle (40) empfängt und speichert und
- bei welchem die Datenquelleneinheit (20) auf der Grundlage der an die Datenzieleinheit (30) aus den Datenquelle (40) gesandten Daten (41) die zweite Aktualisierungsmarke (55) in der Datenquelleneinheit (20) aktualisiert.

4. Verfahren nach einem der vorangehenden Ansprüche,
bei welchem beim Vorliegen mehrerer Datenquelleneinheiten (20), mehrerer Datenquellen (30) in einer und/oder in mehreren Datenquelleneinheiten (20) und/oder mehrerer Datenzieleinheiten (30) Schritte des Registrierens (A), des Mitteilens (B) der Empfangsbereitschaft, des Mitteilens (D) der ersten Aktualisierungsmarke (50) und/oder des Übertragens (F) der Daten (41, 42) aus einer Datenquelle (30) und/oder die ersten und zweiten Aktualisierungsmarken (50) für jede Kombination aus Datenquelleneinheit (20), Datenquelle (40) und Datenzieleinheit (30) unabhängig ausgeführt werden.

5. Verfahren nach einem der vorangehenden Ansprüche,
bei welchem eine Aktualisierungsbedingung bestimmt wird durch
- einen Zeitablauf und/oder
- eine Anforderung einer Datenzieleinheit (30) und/oder
- eine Änderung der und/oder einen Zuwachs an Daten (41, 42) in einer Datenquelle (40).

6. Verfahren nach einem der vorangehenden Ansprüche,
bei welchem Daten (41, 42) einer Datenquelle (40) blockbasiert und/oder framebasiert sind.

7. Verfahren nach einem der vorangehenden Ansprüche,
bei welchem eine Aktualisierungsmarke (50, 55) ein Zeiger ist, der insbesondere auf ein Ende eines zuletzt vollständig übertragenen und/oder empfangenen Blocks oder Frames oder Teils davon verweist.

8. Verfahren nach einem der vorangehenden Ansprüche,
bei welchem eine Datenquelle (40) nach Art eines Ringpuffers (45) organisiert ist und/oder verwaltet wird.

9. Verfahren nach einem der vorangehenden Ansprüche,
welches auf einem Protokoll gemäß mindestens einem der Standards HTTP, LWM2M, CoAP oder dergleichen basiert.

10. Verfahren nach einem der vorangehenden Ansprüche,
bei welchem Kommunikation realisiert wird
- zwischen einem mobilen Endgerät als Datenquelleneinheit (20) und einer Servereinrichtung als Datenzieleinheit (30) und/oder
- zwischen einem ersten mobilen Endgerät als Datenquelleneinheit (20) und einem zweiten mobilen Endgerät als Datenzieleinheit (30) und/oder
- deren Kombinationen.

11. Verfahren nach einem der vorangehenden Ansprüche,
bei welchem ein Registrieren (A) einer Datenquelleneinheit (20) bei einer Datenzieleinheit (30) erfolgt durch Mitteilen ein oder mehrere Ressourcen als Datenquellen (40) und insbesondere über eine RESTful-Operation "REST ressource /path/.../data" der Pfadangabe von der Datenquelleneinheit (20) zur Datenzieleinheit (30).

12. Verfahren nach einem der vorangehenden Ansprüche,
bei welchem ein Mitteilen (B) der Empfangsbereitschaft einer Datenzieleinheit (30) an eine Datenquelleneinheit (20) in Bezug auf eine Datenquelle (40) erfolgt durch
- eine RESTful-Operation des Übertragens "write_attribute(offset=x_0, update_freq, block_size, ...)" von Attributen von der Datenzieleinheit (30) an die Datenquelleneinheit (20) und/oder
- eine RESTful-Operation "observe()" der eigentlichen Bereitschaftsmitteilung von der Datenzieleinheit (30) an die Datenquelleneinheit (20).

13. Verfahren nach einem der vorangehenden Ansprüche,
bei welchem Daten (41, 42) einer Datenquelle (40) Positionsdaten, Performancedaten, Personendaten und/oder Gesundheitsdaten sind, insbesondere bestimmt mittels Sensoren an einem Fahrzeug (1), insbesondere an einem mit Muskelkraft und/oder Motorkraft antreibbaren Fahrzeug, vorzugsweise einem Elektrofahrrad, eBike oder Pedelec.

14. Mit Muskelkraft und/oder mit Motorkraft antreibbares Fahrzeug, insbesondere Elektrofahrrad, eBike, Pedelec oder dergleichen,
- mit einer Sensoreinrichtung (14) zur Datenerfassung, insbesondere von Positionsdaten, Performancedaten, Personendaten und/oder Gesundheitsdaten,
- bei welchem die Sensoreinrichtung (14) direkt oder über eine Steuereinheit (10) am Fahrzeug (1) zur Datenübertragung mittels eines Verfahrens nach einem der Ansprüche 1 bis 13 eingerichtet ist.
